# EUROPEAN PATENT APPLICATION

(11) **EP 2 056 419 A2**
(43) Date of publication of application: **06.05.2009**
(21) Application number: 08018293.4
(22) Date of filing: 20.10.2008
(51) Int. Cl.: H02G 3/32

(54) **Clamp for a plurality of wire harnesses**

(30) Priority: 29.10.2007 JP 2007280475
(71) Applicant: Newfrey LLC, Newark, Delaware 19711 (US)
(72) Inventor: Matsuno, Hiroto, Toyohashi-shi, Aichi-ken (JP)
(74) Representative: Steil, Christian

(57) **Abstract**

The invention relates to a clamp (1) having a wire harness holder (6) for holding a plurality of wire harnesses (3) wherein:
said wire harness holder (6) comprises: a main holder body (10) formed in a U-shaped channel shape, the upper part whereof is open, wherein is formed a space for accommodating a plurality of wire harnesses (3); and a cover (11) for closing the open upper part of said main holder body (10); wherein:
an elastic flexible harness support piece (13) for elastically supporting a plurality of wire harnesses (3) from below is formed in said main holder body (10) at a position of inter-mediate height in said U-shaped channel-shaped space; and a rigid harness accepting part (14) for supporting and restricting the plurality of wire harnesses (3) so that they do not spread out to both sides is also formed in said main holder body (10) at a position that is above said harness support piece (13) and adjacent to the opening of said U-shaped channel-shaped space; and
an elastic harness pressing piece (23), for closing the opening in said U-shaped channel-shaped space, when said cover (11) is closed, and elastically pressing on the upper part of the plurality of wire harnesses (3), is formed in said cover (11); wherewith:
the overall outer circumference of the plurality of wire harnesses (3) accommodated in said U-shaped channel-shaped space is enveloped so as to be elastically pressed against by said harness support piece (13), said harness accepting part (14), and said harness pressing piece (23); the wire harnesses (3)are prevented from sliding in the axial direction; and any noisy shifting about thereof in directions perpendicular to said axial direction is prevented.

## Description

### Technical Field

The present invention relates to a clamp for stabilizing and holding a plurality of wire harnesses, irrespective of whether many or few, in like manner as if wrapped with tape.

### Background Technology

To attach a plurality of wire harnesses to a panel or other member being attached to, wrapping the plurality of wire harnesses with tape is commonly done. By wrapping them with tape, the wire harnesses can be prevented from mutually shifting either in the axial direction or in directions perpendicular to the axial direction. However, the tape wrapping operation is time-consuming, and requires a certain level of skill.

Patent Literature 1: JIKKAI [Unexamined Utility Model Application Publication] No. H5-047666/1993 (Gazette)

Patent Literature 2: JIKKAI No. H7-002690/1995 (Gazette)

Patent Literature 3: JIKKAI No. H7-059232/1995 (Gazette)

Patent Literature 4: TOKKAI [Unexamined Patent Application Publication] No. 2000-346245 (Gazette)

Patent Literature 5: TOKKAI No. 2005-113953 (Gazette)

### Disclosure

### Problems the Invention Would Solve

In Patent Literature 1, a fastener for wire-like objects is described, made so as to be capable of fastening approximately 3 to 8 cords or other wire-like objects to a member being attached to. In this fastener, a pressure clamping piece is provided at one end of an attachment plate, capable of freely bending by a hinge; a pawl-shaped latching piece is erected along the circular arc of the swing path of the pressure clamping piece at the other end of the attachment plate, and a latching part having an inverted U-shaped cross-section, provided with a void for accepting the latching piece, is provided at the free end of the pressure clamping piece, such that, by the engagement of the latching part and the latching piece, 3 to 8 wire-like objects can be fastened in a tight condition between the attachment plate and the pressure clamping piece. In Patent Literature 1, a configuration is described for fastening, with a single fastener, a plurality of cords or other wire-like objects to a member being attached to. This fastener, however, is not one wherewith a plurality of wire-like objects can be fastened so as not to move either in the axial direction thereof or in a direction perpendicular to that axial direction, as when such plurality of wire-like objects is wound with tape.

Patent Literature 2 describes a holding device for electrical wires or the like wherewith two long members such as electrical wires can be secured to a member being attached to. This holding device is of a structure for attaching two electrical wires separately and cannot secure a plurality of long members, such as wire harnesses, together.

Patent Literature 3 describes an inexpensive electrical wire clip wherewith an electrical wire can easily be secured to a member being attached to such as a vehicle body. This clip is of a structure for securing one long member and cannot secure a plurality of long members, such as wire harnesses, together.

A rod-shaped body holder described in Patent Literature 4 has elastic holding pieces for holding the upper outer surface and lower outer surface of a rod-shaped member by the elasticity resulting from flex deformation. This rod-shaped member holder is not of a structure for securing a plurality of long members, such as wire harnesses, together. Moreover, although the elastic holding pieces elastically hold the lower part of the outer surface of a rod-shaped member, the rod-shaped member holder is not a device for enveloping the entirety of a plurality of rod-shaped members as is done by tape wrapping.

A cable clamp described in Patent Literature 5, furthermore, is of a structure for securely holding one cable. This cable clamp is not of a structure for securing a plurality of long members, such as wire harnesses, together. Nor is it a device for enveloping the entirety of a plurality of rod-shaped members as is done by tape wrapping. A holder is described.

That being so, an object of the present invention is to provide a wire harness clamp wherewith, without necessitating a tape wrapping operation, a plurality of wire harnesses may be fastened such that the wire harnesses cannot move, either in the axial direction of the wire harnesses, or in directions perpendicular to that axial direction, as when the wire harnesses are wrapped with tape.

### Means for Solving the Problems

In order to attain said object, the clamp having a wire harness holder for holding a plurality of wire harnesses, based on the present invention, is one wherein the wire harness holder comprises a main holder body formed in a U-shaped channel shape, the upper part whereof is open, wherein is formed a space for accommodating a plurality of wire harnesses, and a cover for closing the open upper part of the main holder body, an elastic flexible harness support piece for elastically supporting a plurality of wire harnesses from below is formed in the main holder body at a position of intermediate height in the U-shaped channel-shaped space, and a rigid harness accepting part, for supporting and restricting the plurality of wire harnesses so that they do not spread out to both sides, is also formed in the main holder body at a position that is above the harness support piece and adjacent to the opening of the U-shaped channel-shaped space, wherein, moreover, an elastic harness pressing piece for closing the opening in the U-shaped channel-shaped space when the cover is closed and elastically pressing on the upper part of the plurality of wire harnesses is formed in the cover, whereupon the overall outer circumference of the plurality of wire harnesses accommodated in the U-shaped channel-shaped space is enveloped so as to be elastically pressed against by the harness support piece, the harness accepting part and the harness pressing piece, the wire harnesses are prevented from sliding in the axial direction, and any noisy shifting about thereof in directions perpendicular to the axial direction is prevented.

With the clamp relating to the present invention as described above, the entire outer circumference of the plurality of wire harnesses accommodated in the U-shaped channel-shaped space is enveloped by the harness support piece, the harness accepting part and the harness pressing piece so as to be elastically pressed against, and the wire harnesses are prevented from noisily shifting about. Therefore, the same effectiveness as when the wire harnesses are wrapped with tape is provided so that tedious tape-winding operations can be abandoned, holding can be effected with the same clamp, even for different numbers of wire harnesses, and clamps can be commonly used.

In the clamp described above, the structure is one wherein preferably one end of the cover is connected by a hinge to one side of the main holder body, and the cover turns about the hinge to close the open portion of the main holder body. The structure is also preferably one wherein a locking part is formed in the cover on the opposite end from the hinge, and a latching part for latching with the locking part is formed in the main holder body on the opposite side from the hinge, so that when the cover turns about the hinge and closes the opening in the main holder body, the locking part latches with the latching part and the closed condition of the open portion is maintained.

The locking part preferably has a first locking pawl and a second locking pawl for latching with the latching part, the first locking pawl is formed at a position where it will latch with the latching part when the cover is in an attitude such that the space in the upper part of the wire harness accommodating space of the main holder body is slightly widened, and the second locking pawl is formed at a position where it will latch with the latching part when the cover is in an attitude such that the space in the upper part of the wire harness accommodating space of the main holder body is not widened. Preferably, the harness support piece and the harness accepting part, respectively, are formed in pairs thereof, so as to protrude to the inside of the U-shaped channel-shaped space.

A panel securing part that is to be secured to a panel or other member being attached to is preferably integrally formed in the wire harness holder. The panel securing part preferably has a pair of elastic latching parts for clamping a plate-shaped attachment part erected on a panel.

As a consequence, the operation of attaching the clamp to the member being attached to is made easy, and the wire harness attaching operation can easily be performed.

### Brief Description of the Drawings

Fig. 1 is a plan of a wire harness clamp relating to one embodiment of the present invention.
Fig. 2 is a front elevation of the clamp diagrammed in Fig. 1.
Fig. 3 is a right side elevation of the clamp diagrammed in Fig. 2.
Fig. 4 is a front elevation representing how three wire harnesses are held in the clamp diagrammed in Fig. 2 and attached to a panel.
Fig. 5 is a front elevation representing how five wire harnesses are held in the clamp diagrammed in Fig. 2.
Fig. 6 is a front elevation representing how six wire harnesses are held in the clamp diagrammed in Fig. 2.
Fig. 7 is a front elevation representing how eight wire harnesses are held in the clamp diagrammed in Fig. 2.

### Preferred Embodiments of the Invention

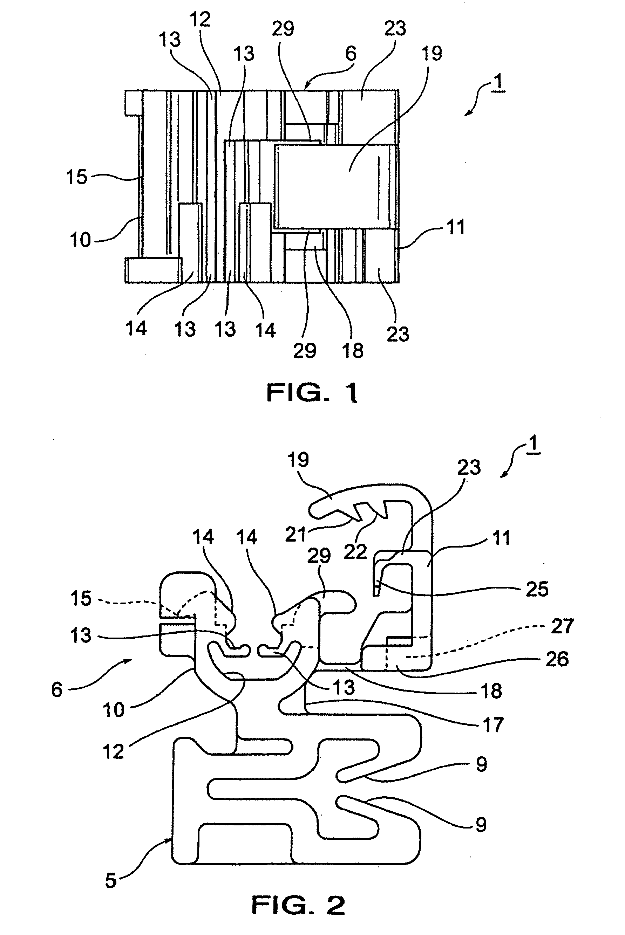

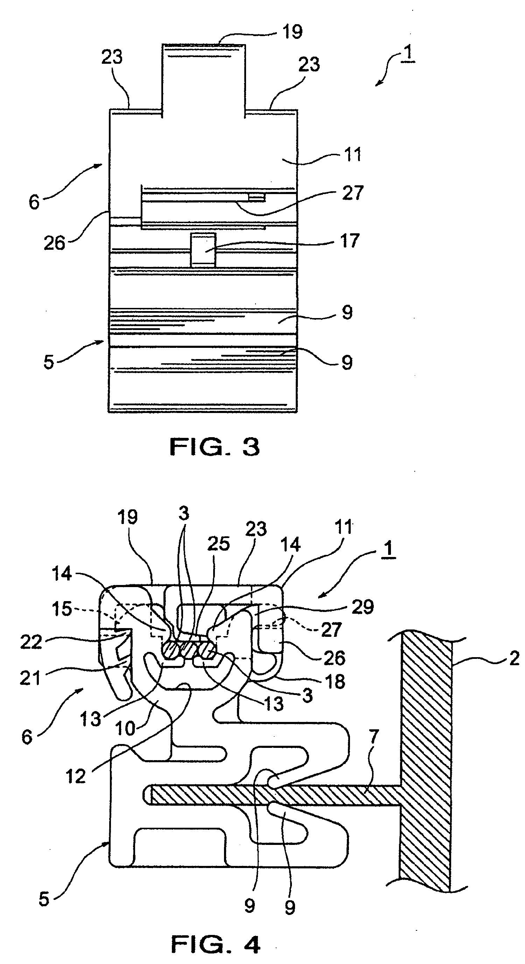

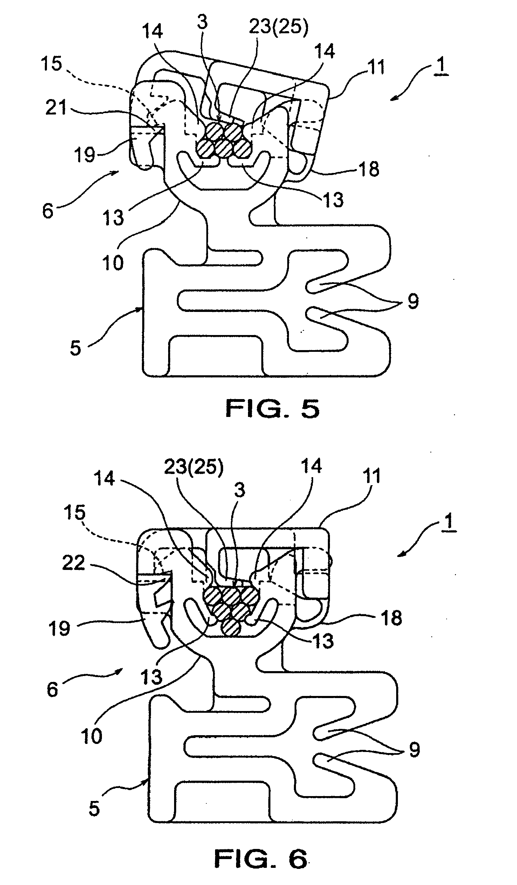

A clamp 1 for a plurality of wire harnesses of small diameter, relating to one embodiment of the present invention, is now described with reference to the drawings. In Figs. 1, 2, and 3, respectively, a plan, front elevation, and right side elevation of the clamp 1 are shown. The clamp 1 is integrally molded of a hard plastic material. Fig. 4 diagrams the manner in which three wire harnesses 3 of small diameter are attached to a panel 2 that is the member being attached to by the clamp 1. Figs. 5, 6 and 7, respectively, diagram how 5, 6 and 8 wire harnesses 3, respectively, are held in the clamp 1.

The configuration of the clamp 1 is now described with reference to Figs. 1 to 3. The clamp 1 comprises a panel securing part 5 and a wire harness holder 6. The panel securing part 5, as diagrammed in Fig. 4, has a pair of elastic latching parts 9 for biting onto a plate-shaped attachment part 7 erected on the panel 2. The clamp 1, when it is pushed onto the panel 2 so that the plate-shaped attachment part 7 diagrammed in Fig. 4 is accepted between the pair of elastic latching parts 9, is secured to the panel 2. The elastic latching parts 9 of the panel securing part 5, furthermore, in the example diagrammed, are formed in shapes wherewith the attachment part 7 of the panel 2 is accepted from the right side in Fig. 2, but the attachment part 7 of the panel 2 may instead be of a shape that is accepted from the left side or from below. The panel securing part 5 may also be of some other shape, such, for example, for cases where a rod-shaped stud wherein threads or a circumferential channel is formed is erected on the panel 2, as a shape wherewith that rod-shaped stud is accepted and latched, or, for cases where an attachment hole is formed in the panel 2, a clip shape for insertion into and latching to that attachment hole.

The wire harness holder 6 is securely connected to the panel securing part 5, and, as diagrammed in Fig. 1, is of a certain width (the length in the vertical direction in Fig. 1) so as to hold wire harnesses across a certain length. The wire harness holder 6, as diagrammed in Fig. 2, comprises a main holder body 10 that is formed, from the open upper surface downward, in a substantially U-shaped channel shape, and a cover 11 for closing the open portion of the main holder body 10. The inside of the main holder body 10 is formed downward from the top as a rigid wall surface 12 that has a U-shaped channel shape, as diagrammed in Fig. 2, for accommodating and holding the plurality of wire harnesses 3 of small diameter. At a position of an intermediate height on the U-shaped channel-shaped wall surface 12, a pair of harness support pieces 13 is formed, extending from the side walls toward the interior of the U-shaped channel. The harness support pieces 13 are flexed downward by the plurality of wire harnesses 3 accommodated in the main holder body 10, whereupon they elastically support the lower portions of the wire harnesses 3 in a flexed and deformed condition. The harness support pieces 13 may be formed so that, as diagrammed in Fig. 1, one thereof (on the left side) extends across the entire width of the main holder body 10 and the other (on the right side) is shorter than the entire width of the main holder body 10, or alternatively, both of the harness support pieces 13 may be formed so as to extend across the entire width of the main holder body 10. In the main holder body 10, as diagrammed in Fig. 2, rigid harness accepting parts 14 are provided in a pair, at positions adjacent to the open portion of the U-shaped channel, higher than the harness support pieces 13, for supporting wire harnesses accepted into the U-shaped channel space and restricting them so that they do not spread out to both sides. These harness accepting parts 14 also work together with the harness support pieces 13, functioning so as to envelope the plurality of wire harnesses 3 of small diameter from the upper parts thereof on both sides. The harness accepting parts 14, as diagrammed in Fig. 1, are formed to a length that is substantially half the width of the main holder body 10. That length may instead be the entire width of the main holder body 10. The harness accepting parts 14 are rigid, while the harness support pieces 13 are elastic; wherefore, if the number of wire harnesses 3 increases, the plurality of wire harnesses 3 will flex the harness support pieces 13 downward, and some of the wire harnesses will be pushed downward to the bottom wall of the main holder body 10, as diagrammed in Figs. 5 to 7.

A latching part 15, wherein is formed a latching shoulder for latching with locking pawls 21 and 22 in the cover 11, is formed on the side of the main holder body 10 opposite the cover 11. The latching part 15 is formed on the back surface side of the harness accepting part 14 that is on the left in Fig. 2, as indicated by a broken line.

Furthermore, a rib 17 is formed at the boundary between the bottom of the main holder body 10 and the upper side wall of the panel securing part 5, for increasing the connection strength.

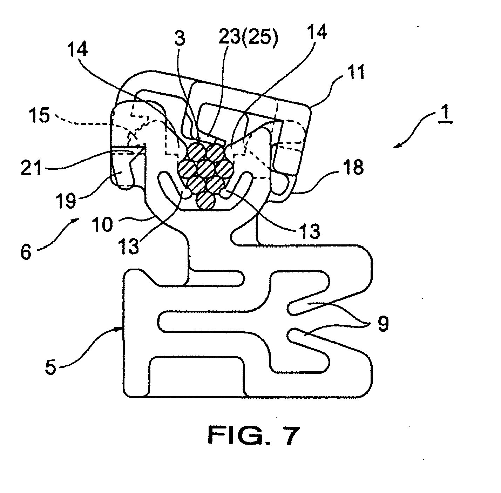

One end of the cover 11 is connected to one side of the main holder body 10 by a hinge 18 that is in the form of a thin plate, so that that cover is capable of turning about the hinge 18. The cover 11 turns about the hinge 18, closes the main holder body 10 at the top of the plurality of wire harnesses 3 accommodated and held between the pair of harness support pieces 13 and the pair of harness accepting parts 14 and prevents the wire harnesses 3 from pulling out. For that reason, a locking part 19 is formed at the tip end (the upper end in Fig. 2) of the cover 11. In the locking part 19, a first locking pawl 21 and a second locking pawl 22 are formed for latching on the latching part 15 of the main holder body 10. The first locking pawl 21 is formed at the tip end of the locking part 19 that is formed in an inverted L shape as diagrammed in Fig. 2, while the second locking pawl 22 is formed more toward the root thereof than is the first locking pawl 21. The first locking pawl 21, when it latches on the latching part 15, closes the cover 11 in an attitude such that that cover is angled upward on the left side, as diagrammed in Fig. 5 and Fig. 7, slightly widening the upper part of the space in the main holder body 10 where the wire harnesses are supported so as to increase the number of wire harnesses that can be accommodated therein. The second locking pawl 22, when it latches on the latching part 15, closes the cover 11 in a horizontal attitude, as diagrammed in Fig. 4 and Fig. 6, accommodating the wire harnesses only in the space inside the main holder body 10, without widening the upper part of the space wherein the wire harnesses are supported in the main holder body 10. The latching of the first locking pawl 21 or of the second locking pawl 22 is selected according to the number of wire harnesses 3 to be held, as diagrammed in Figs. 4 to 7. This is because, depending on the number of wire harnesses 3 to be held, not only will the accommodating capacity increase or decrease, but, as diagrammed in Figs. 4 to 7, the degree of deformation in the elastic harness support pieces 13 will differ, depending on the number of wire harnesses 3 to be held, and the accommodating capacity between the harness support pieces 13 and the harness accepting parts 14 will change. The latching positions of the first locking pawl 21 and second locking pawl 22, respectively, are selected according to the diameters and number of wire harnesses 3 to be held and the geometric dimensions of the accommodating shape.

In the cover 11, furthermore, harness pressing pieces 23 are formed which function both to elastically support and envelope the upper parts of the plurality of wire harnesses 3 accommodated between the elastic harness support pieces 13 and the rigid harness accepting parts 14. In the harness pressing pieces 23, tip parts 25 (Fig. 2) are formed so as to elastically press the wire harnesses between the pair of harness accepting parts 14. The harness pressing pieces 23 and the tip parts 25, in the examples diagrammed in Fig. 3, are formed on both sides of the cover 11 in the width dimension (the left and right directions in Fig. 3), with the locking part 19 between them; however, in another example, they may be formed so as to extend across the entire width of the main holder body 10. The harness pressing pieces 23, working together with the harness support pieces 13 and harness accepting parts 14, function so as to envelop the entirety of the plurality of wire harnesses 3. As diagrammed in Figs. 4 to 7, the wire harnesses 3 are supported at the bottom by the pair of harness support pieces 13, are restricted at both sides by the pair of harness accepting parts 14 and are elastically pressed down from the top by the harness pressing pieces 23 having the elastic tip parts 25. As a result, the wire harnesses 3 are enveloped such that the entire outer circumference thereof is elastically pressed against by the harness support pieces 13, the harness accepting parts 14 and the harness pressing pieces 23, with the same effectiveness as though wrapped with tape. Not only can the noisy shifting about thereof in directions perpendicular to the axial dimension of the wire harnesses be prevented thereby, but the wire harnesses can also be prevented from sliding in the axial direction thereof.

As diagrammed in Fig. 2, moreover, the portion of the cover 11 adjacent to the thin hinge 18 is formed as a rigid wall 26 extending to the left. Thereby, when turned about the hinge 18 and closed, the cover 11 becomes horizontal at a certain height relative to the main holder body 10, and the harness pressing pieces 23 of the cover 11 close the upper part of the main holder body 10 in a suitable attitude.

In the rigid wall 26, as indicated by a broken line in Fig. 2, a window-shaped latching hole 27 is formed, open below and on the right side. In the main holder body 10 at a position adjacent to the harness accepting part 14 on the side nearest the cover 11, a projection 29 is provided, oriented toward the latching hole 27. When the cover 11 is turned about the hinge 18, the projection 29 is inserted into the latching hole 27 formed in the rigid wall 26. More specifically, when the cover 11 turns about the hinge 18 and a locking pawl of the locking part 19 latches with the locking part 19, the projection 29 is inserted into the latching hole 27 and latches on a latching shoulder formed in the latching hole 27, whereupon the cover 11 locks in a closed condition. As a consequence, even should the thin hinge 18 break for some reason, the cover 11 will be maintained in the closed and locked condition, and the wire harnesses 3 will be maintained in a held condition.

The manner in which three wire harnesses 3 of small diameter are attached to a member being attached to such as a panel 2, using the clamp 1 configured as described, is diagrammed in Fig. 4. The three wire harnesses 3 of small diameter are accommodated in the accommodating space between the harness support pieces 13 and harness accepting parts 14 of the main holder body 10, the cover 11 is turned about the hinge 18, and the first locking pawl 21 of the locking part 19 latches on the latching shoulder of the latching part 15 of the main holder body 10; however, in the case of three wire harnesses 3, the cover 11 can be pushed in further, whereupon the second locking pawl 22 latches on the latching shoulder of the latching part 15. Thereby, the cover 11 is locked in a closed condition. In this locked condition, the projection 29 in the main holder body 10 is inserted into the latching hole 27 in the rigid wall 26 of the cover 11, thereby contributing to the hinge 18 in securely maintaining a locked condition. When the wire harnesses 3 are long, a plurality of these clamps 1 are attached at a plurality of locations on the wire harnesses 3. When wire harnesses are being attached to an automobile panel, moreover, the clamps 1 are attached at prescribed locations on the wire harnesses according to the layout in which the wire harnesses are deployed. After that is done, the elastic latching parts 9 of the panel securing parts 5 are oriented toward the attachment parts 7 erected on the panel 2 and pushed on, whereupon the panel securing parts 5 are secured to the panel 2, and the three wire harnesses 3 are attached to the panel 2 by the clips 1.

The three wire harnesses 3 of small diameter are accommodated in the wire harness holder 6, in the space between the pair of harness support pieces 13 and the pair of harness accepting parts 14, inside the main holder body 10. The main holder body 10 has turned about the hinge 18, the locking part 19 is in a position where it latches with the latching part 15 of the main holder body 10, and the second locking pawl 22 has latched on the latching shoulder of the latching part 15. Thereby, the tip parts 25 of the harness pressing pieces 23 are elastically flexed and pressed against the upper parts of the three wire harnesses 3 so as to envelope them. The three wire harnesses 3 are enveloped such that the entire outer circumference thereof is elastically pressed against by the harness support pieces 13, the harness accepting parts 14, and the harness pressing pieces 23, with the same effectiveness as though wrapped with tape. Not only can the noisy shifting about thereof in directions perpendicular to the axial dimension of the wire harnesses 3 be prevented thereby, but the wire harnesses can also be prevented from sliding in the axial direction thereof.

Figs. 5 to 7 diagram how different numbers of wire harnesses 3 are held by the clamp 1. In Fig. 5, five wire harnesses 3 are held in the clamp 1. In this case, the first locking pawl 21 of the locking part 19 is latched on the latching shoulder of the latching part 15. Even in this locked condition, the five wire harnesses 3 are enveloped such that the entire outer circumference thereof is elastically pressed against by the harness support pieces 13, the harness accepting parts 14 and the harness pressing pieces 23, with the same effectiveness as though wrapped with tape. Not only can the noisy shifting about thereof in directions perpendicular to the axial dimension of the wire harnesses 3 be prevented thereby, but the wire harnesses can also be prevented from sliding in the axial direction thereof. In Fig. 6, six wire harnesses 3 are held by the clamp 1. In this case, the second locking pawl 22 of the locking part 19 is latched on the latching shoulder of the latching part 15. In this locked condition, the wire harness 3 at the bottom makes contact with the bottom wall of the main holder body 10; but in this condition also, the six wire harnesses 3 are enveloped such that the entire outer circumference thereof is elastically pressed against by the harness support pieces 13, the harness accepting parts 14 and the harness pressing pieces 23, with the same effectiveness as though wrapped with tape. Not only can the noisy shifting about thereof in directions perpendicular to the axial dimension of the wire harnesses 3 be prevented thereby, but the wire harnesses can also be prevented from sliding in the axial direction thereof. In the case diagrammed in Fig. 7, eight wire harnesses 3 are held by the clamp 1. The first locking pawl 21 of the locking part 19 is latched on the latching shoulder of the latching part 15. In this locked condition also, the lowermost wire harness 3 makes contact with the bottom wall of the main holder body 10, but the eight wire harnesses 3 are enveloped such that the entire outer circumference thereof is elastically pressed against by the harness support pieces 13, the harness accepting parts 14 and the harness pressing pieces 23, with the same effectiveness as though wrapped with tape. Not only can the noisy shifting about thereof in directions perpendicular to the axial dimension of the wire harnesses 3 be prevented thereby, but the wire harnesses can also be prevented from sliding in the axial direction thereof.

The strength wherewith the tip parts 25 of the harness pressing pieces 23 flex, that is, the strength wherewith they press against the wire harnesses, can be selected so that in any of the cases diagrammed in Figs. 4 to 7, the wire harnesses 3 will be enveloped such that the entire outer circumference thereof will be elastically pressed against by the harness support pieces 13, the harness accepting parts 14 and the harness pressing pieces 23, with the same effectiveness as though wrapped with tape.

As described above, from 3 to 8 wire harnesses 3 of small diameter can be held with the same clamp 1 in the same manner as though wrapped with tape, and the operation of attaching them to a panel or the like can easily be performed. Accordingly, with the clamp 1, not only can tedious tape-wrapping operations be done away with, but different numbers of wire harnesses can be held by the same clamp, so that clamps can be commonly used. In addition, because the operation of attaching wire harnesses to a member being attached to with a clamp is made easy, wire harness attachment operations can be accomplished in a shorter time, without requiring any special skill.

## Claims

1. A clamp (1) having a wire harness holder (6) for holding a plurality of wire harnesses (3) wherein:
said wire harness holder (6) comprises: a main holder body (10) formed in a U-shaped channel shape, the upper part whereof is open, wherein is formed a space for accommodating a plurality of wire harnesses (3); and a cover (11) for closing the open upper part of said main holder body (10); wherein:
an elastic flexible harness support piece (13) for elastically supporting a plurality of wire harnesses (3) from below is formed in said main holder body (10) at a position of inter-mediate height in said U-shaped channel-shaped space; and a rigid harness accepting part (14) for supporting and restricting the plurality of wire harnesses (3) so that they do not spread out to both sides is also formed in said main holder body (10) at a position that is above said harness support piece (13) and adjacent to the opening of said U-shaped channel-shaped space; and
an elastic harness pressing piece (23), for closing the opening in said U-shaped channel-shaped space, when said cover (11) is closed, and elastically pressing on the upper part of the plurality of wire harnesses (3), is formed in said cover (11); wherewith:
the overall outer circumference of the plurality of wire harnesses (3) accommodated in said U-shaped channel-shaped space is enveloped so as to be elastically pressed against by said harness support piece (13), said harness accepting part (14), and said harness pressing piece (23); the wire harnesses (3) are prevented from sliding in the axial direction; and any noisy shifting about thereof in directions perpendicular to said axial direction is prevented.

2. The clamp according to claim 1, wherein one end of said cover (11) is connected by a hinge (18) to one side of said main holder body (10), and the cover (11) turns about said hinge (18) to close the open portion of said main holder body (10).

3. The clamp according to claim 2, wherein a locking part (19) is formed in said cover (11) on the opposite end from said hinge; and a latching part (15) for latching with said locking part (19) is formed in said main holder body (10) on the opposite side from said hinge (18); whereupon, when the cover (11) turns about said hinge (18) and closes the opening in said main holder body (10), said locking part (19) latches with said latching part (19) and the closed condition of said open portion is maintained.

4. The clamp according to claim 3, wherein said locking part (19) has a first locking pawl (21) and a second locking pawl (22) for latching with said latching part (15); said first locking pawl (21) is formed at a position where it will latch with said latching part (15) when said cover (11) is in an attitude such that the space in the upper part of the wire harness accommodating space of said main holder body (10) is slightly widened; and the second locking pawl (22) is formed at a position where it will latch with said latching part (15) when said cover (11) is in an attitude such that the space in the upper part of the wire harness accommodating space of said main holder body (10) is not widened.

5. The clamp according to any one of claims 1 to 4, wherein said harness support piece (13) and said harness accepting part (14), respectively, are formed in pairs thereof, so as to protrude to the inside of said U-shaped channel-shaped space.

6. The clamp according to any one of claims 1 to 5, wherein, furthermore, a panel securing part (5) that is to be secured to a panel (2) or other member being attached to is integrally formed in said wire harness holder (6).

7. The clamp according to claim 6, wherein said panel securing part (5) has a pair of elastic latching parts (9) for clamping a plate-shaped attachment part (7) erected on a panel (2).
